# EUROPEAN PATENT APPLICATION

(11) **EP 2 634 764 A2**
(43) Date of publication of application: **04.09.2013**
(21) Application number: 13156810.7
(22) Date of filing: 26.02.2013
(51) Int. Cl.: G09F 3/10, G09F 3/02

(54) **Pressure-sensitive adhesive label and label issuing device**

(30) Priority: 28.02.2012 JP 2012040950
(71) Applicant: Seiko Instruments Inc., Chiba-shi, Chiba (JP)
(72) Inventor: Tani, Kazuo, Chiba-shi,, Chiba (JP); Sato, Yoshinori, Chiba-shi,, Chiba (JP)
(74) Representative: Miller Sturt Kenyon

(57) **Abstract**

To enable a pressure-sensitive adhesive region and a non-pressure-sensitive adhesive region to be set immediately before use of a pressure-sensitive adhesive label (1) in accordance with the purpose of use, provided is a pressure-sensitive adhesive label(1), including: a base; a pressure-sensitive adhesive layer provided on the base; a thermosensitive film provided on the pressure-sensitive adhesive layer; and the pressure-sensitive adhesive region including a plurality of openings (8) through which the thermosensitive film is opened to expose the pressure-sensitive adhesive layer. The pressure-sensitive adhesive region includes an opening pattern in which the plurality of openings (8) are arranged regularly. Thus, it is possible to set the pressure-sensitive adhesive region and the non-pressure-sensitive adhesive region immediately before the use of the pressure-sensitive adhesive label in accordance with the purpose of use.

## Description

The present invention relates to a pressure-sensitive adhesive label that has non-pressure-sensitive adhesiveness at a time of storage and is allowed to exhibit pressure-sensitive adhesiveness at a time of use.

In recent years, pressure-sensitive adhesive labels have been used for a price indication label, a product indication label, an advertisement label, a seal label for a package, and the like. The pressure-sensitive adhesive label is formed of a base including an indication recording layer, a pressure-sensitive adhesive layer, and a release sheet. When the pressure-sensitive adhesive label is adhered to an adherend, the release sheet is peeled, and the pressure-sensitive adhesive label is adhered to the adherend via the exposed pressure-sensitive adhesive layer. A typical pressure-sensitive adhesive label is formed by adhering a band-shape release sheet to a pressure-sensitive adhesive layer formed by coating the entire reverse surface of a band-shaped base with a pressure-sensitive adhesive, and stamping out the resultant pressure-sensitive adhesive layer. Therefore, when a release sheet is peeled and a pressure-sensitive adhesive label is adhered to an adherend, the pressure-sensitive adhesive label is adhered to the adherend over the entire reverse surface of the pressure-sensitive adhesive label. However, depending on applications, there may be the case in which it is necessary to adhere a pressure-sensitive adhesive label to an adherend while partially sealing the pressure-sensitive adhesive strength of the pressure-sensitive adhesive label, instead of adhering the pressure-sensitive adhesive label to the adherend over the entire reverse surface of the pressure-sensitive adhesive label. Further, depending on applications, there may be the case in which a pressure-sensitive adhesive label is adhered to an adherend with the pressure-sensitive adhesive strength being changed, or adhesion and peeling are repeated.

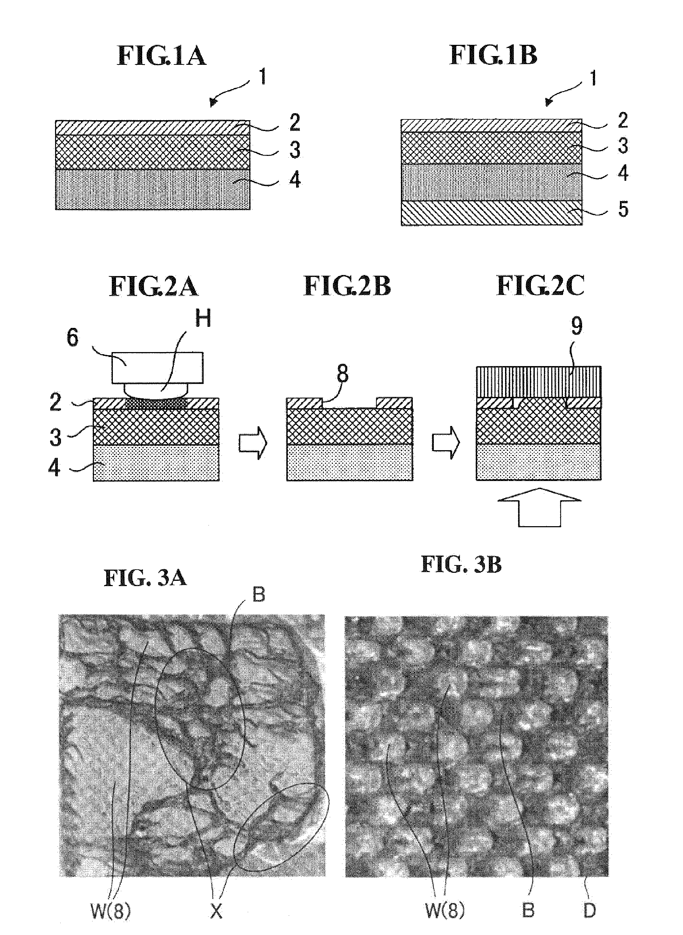

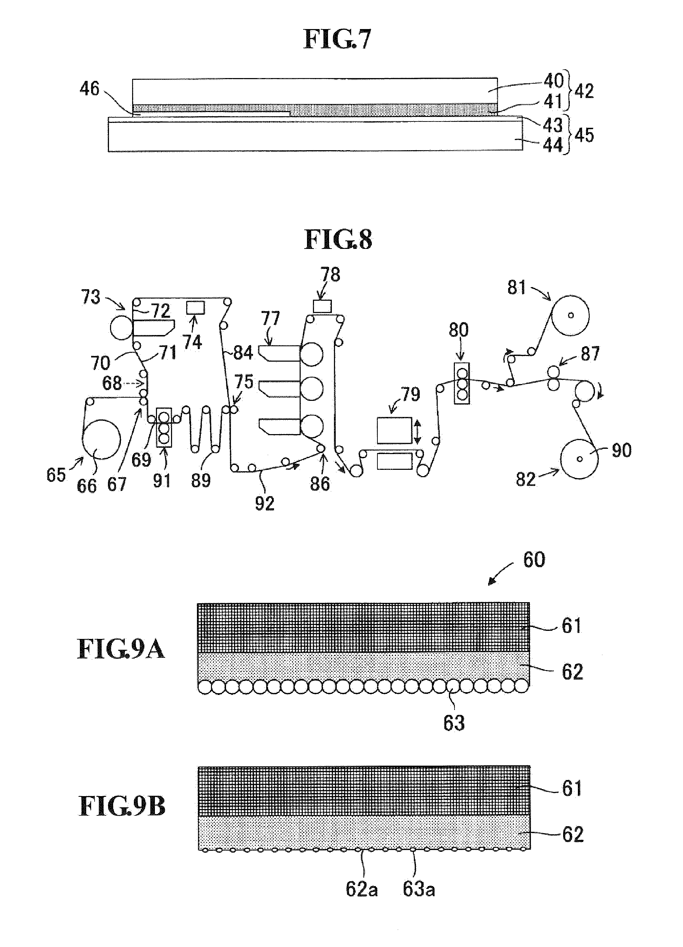

FIG. 7 is a cross-sectional view of a label with a release sheet (pressure-sensitive adhesive label) in which pressure-sensitive adhesive strength is partially sealed (FIG. 2 of Japanese Patent Application Laid-open No. 2002-99215). The label with a release sheet includes a band-shaped release sheet 45 and a label 42 provisionally adhering to the release sheet 45 at a predetermined pitch. The release sheet 45 includes a band-shaped peeling sheet 44 and a peeling agent layer 43 made of silicone and applied to the surface of the peeling sheet 44. The label 42 includes a label base 40 and a pressure-sensitive adhesive layer 41 including a pressure-sensitive adhesive and applied to the reverse surface of the label base 40. The label 42 provisionally adheres to the release sheet 45 via the pressure-sensitive adhesive layer 41. The pressure-sensitive adhesive layer 41 of the label 42 is formed over the entire reverse surface of the label base 40, and a glue excluding agent 46 is printed to a part of the pressure-sensitive adhesive layer 41 to seal pressure-sensitive adhesiveness. As the glue excluding agent 46, a mixture of printing ink and a peeling agent (silicone in this case) is used, and the glue excluding agent 46 is directly printed onto the pressure-sensitive adhesive layer 41 through use of a relief printing plate.

FIG. 8 is a schematic view of a production device, for illustrating a method of producing the above-mentioned label with a release sheet in which pressure-sensitive adhesive strength is partially sealed (FIG. 3 of Japanese Patent No. 4359036). A roll-shaped pressure-sensitive adhesive sheet 66 mounted to a roll-out device 65 is rolled out and separated into a pressure-sensitive adhesive sheet body 68 and a peeling board 69 by a nip roller 67. Regarding the separated pressure-sensitive adhesive sheet body 68, a predetermined surface portion of a pressure-sensitive adhesive layer 71 formed on the reverse surface of a base 70 is covered with OP varnish or the like by a printing unit 73, and thereafter, the OP varnish is cured with a UV drier 74 to obtain a partially pressure-sensitive adhesive sheet body 84 in which a non-pressure-sensitive adhesive portion 72 is formed by "glue exclusion". On the other hand, regarding the peeling board 69, perforation is formed by a die roll 91 in a predetermined portion which is to face the non-pressure-sensitive adhesive portion 72 of the partially pressure-sensitive adhesive sheet body 84 when the peeling board 69 is adhered to the pressure-sensitive adhesive sheet body 84, and through portions are formed to obtain a processed peeling board 89. The partially pressure-sensitive adhesive sheet body 84 and the processed peeling board 89 thus obtained are adhered to each other again by the nip roller 75 to form a partially pressure-sensitive adhesive sheet 92. The partially pressure-sensitive adhesive sheet 92 is subjected to predetermined printing by a printing unit 77 by way of a guide roller 86, and printing ink is cured with a UV drier 78. The partially pressure-sensitive adhesive sheet 92 is subjected to stamping-out processing of a partially pressure-sensitive adhesive label body by a flat die 79 or the like and adjustment of a sheet width by a slitter 80, and then unnecessary portions are removed by a waste removal portion 81. The resultant partially pressure-sensitive adhesive sheet 92 is rolled up by a roll-up device 82 by way of a nip roller 87, to thereby obtain a roll-shaped partially pressure-sensitive adhesive label 90.

A pressure-sensitive adhesive label that does not use a release sheet has also been proposed. FIGS. 9A and 9B are cross-sectional side views of a thermosensitive pressure-sensitive adhesive member 60 described in Japanese Patent Application Laid-open No. Hei 9-111203. That is, as illustrated in FIG. 9A, the thermosensitive pressure-sensitive adhesive member 60 has a configuration in which a pressure-sensitive adhesive layer 62 is provided under a base sheet 61, and a microcapsule layer 63 is provided so as to cover the pressure-sensitive adhesive surface of the pressure-sensitive adhesive layer 62. The microcapsule layer 63 has no pressure-sensitive adhesiveness, and hence a release sheet is not required. The microcapsule layer 63 is a substantially single layer of hollow microcapsules and has a melting point of, for example, about 100°C to 180°C. When the microcapsule layer 63 is heated to this temperature, the microcapsule layer 63 is broken, and the volume thereof is reduced (63a). Consequently, a pressure-sensitive adhesive surface 62a of the pressure-sensitive adhesive layer 62 is exposed to exhibit pressure-sensitive adhesiveness.

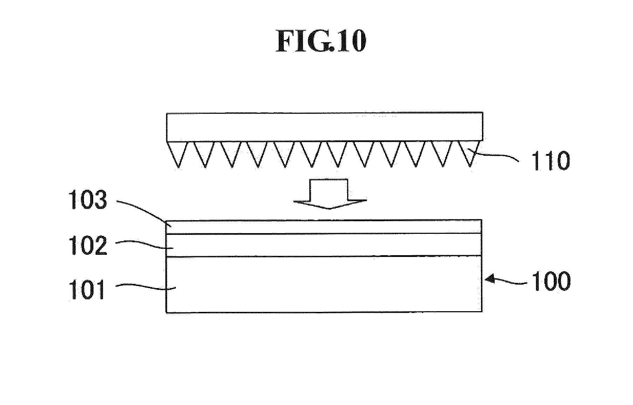

Further, Japanese Patent Application Laid-open No. 2006-78733 describes a pressure-sensitive adhesive label which does not use a release sheet and solves a problem such as blocking. FIG. 10 (FIG. 2 of Japanese Patent Application Laid-open No. 2006-78733) illustrates a laminated structure of a pressure-sensitive adhesive label 100. As illustrated in FIG. 10, the pressure-sensitive adhesive label 100 has a laminated structure in which a base 101, a pressure-sensitive adhesive 102, and a resin film 103 are laminated. The resin film 103 is made of a polyester film and has a thickness of 1 to 3 µm. The pressure-sensitive adhesive label 100 prevents blocking during storage by covering the surface of the pressure-sensitive adhesive with the resin film 103, instead of using a release sheet or a thermosensitive pressure-sensitive adhesive. During use, holes are formed in the resin film 103 through use of needles 110 or holes are formed in a stretched polyester film used as the resin film by a heating system, for example, thermal head heating to break a blocking prevention function and expose the pressure-sensitive adhesive of an underlying layer. In this manner, pressure-sensitive adhesive strength is exhibited.

However, the pressure-sensitive adhesive label described in Japanese Patent Application Laid-open No. 2002-99215, in which pressure-sensitive adhesive strength is partially sealed, has the following problem. In this pressure-sensitive adhesive label, a non-pressure-sensitive adhesive region is formed by partially coating a pressure-sensitive adhesive surface of the pressure-sensitive adhesive layer 41 with the glue excluding agent 46. That is, the non-pressure-sensitive adhesive region is set in advance in a stage of producing a pressure-sensitive adhesive label, and then the pressure-sensitive adhesive label is produced. Therefore, when the pressure-sensitive adhesive label adheres under pressure to an adherend, the area and pressure-sensitive adhesive strength of the pressure-sensitive adhesive region cannot be set as necessary.

Further, as described in Japanese Patent No. 4359036, in the pressure-sensitive adhesive label described in Japanese Patent No. 4359036, the roll-shaped pressure-sensitive adhesive sheet 66 is temporarily separated into the pressure-sensitive adhesive sheet body 68 and the peeling board 69. Then, the non-pressure-sensitive adhesive portion 72 is formed by glue exclusion in the pressure-sensitive adhesive layer 71 of the pressure-sensitive adhesive sheet body 68 to obtain the partially pressure-sensitive adhesive sheet body 84, and perforation and through portions are formed in the peeling board 69 to obtain the processed peeling board 89. The partially pressure-sensitive adhesive sheet body 84 and the processed peeling board 89 are adhered to each other again to obtain the partially pressure-sensitive adhesive sheet 92. Therefore, the non-pressure-sensitive-adhesive region is set in advance and cannot be set immediately before the pressure-sensitive adhesive sheet is adhered to an adherend. Further, a large-scale apparatus is required for producing the partially pressure-sensitive adhesive sheet.

Further, in the thermosensitive pressure-sensitive adhesive member 60 of Japanese Patent Application Laid-open No. Hei 9-111203, the microcapsule layer 63 has a spherical shape. Therefore, when the microcapsule layer 63 comes into contact with a heat source, the microcapsule layer 63 comes into point contact with the heat source, and hence, heat conductivity is low and large heat energy is required for breaking the microcapsule layer 63. Therefore, the thermosensitive pressure-sensitive adhesive member 60 is not suitable for label issuance with low power consumption, which does not result in alleviation of an environmental burden. Japanese Patent Application Laid-open No. Hei 9-111203 neither describes nor suggests the controllability of an opening when the microcapsule layer 63 is heated to reduce a volume, thereby exposing the pressure-sensitive adhesive layer 62. Thus, the controllability of the opening is unclear.

Further, in Japanese Patent Application Laid-open No. 2006-78733, when the pressure-sensitive adhesive label is issued continuously, the resin film which is a pressure-sensitive adhesive surface of the label is brought into contact with and passed through a roller having a needle-shaped surface. Consequently, holes are opened in the resin film to expose the pressure-sensitive adhesive. However, when holes are opened in the resin film, the pressure-sensitive adhesive adheres to the needles, and when the roller is rotated, the resin film is pulled by the roller to be broken. Therefore, the position and area of a region in which pressure-sensitive adhesiveness is to be expressed cannot be controlled with high accuracy. Further, although Japanese Patent Application Laid-open No. 2006-78733 describes that holes are opened in the resin film by thermal head heating to break the blocking prevention function, Japanese Patent Application Laid-open No. 2006-78733 neither describes nor suggests the controllability of the opening when a part of the resin film is opened. Thus, the controllability of the opening is unclear.

The pressure-sensitive adhesive label is used for various adherends under various environments. Therefore, if it is possible to set a pressure-sensitive adhesive region and a non-pressure-sensitive adhesive region of a pressure-sensitive adhesive label and to control pressure-sensitive adhesive strength thereof in accordance with the use environment, the properties of an adherend, and the purpose of use, a pressure-sensitive adhesive label with high convenience can be provided.

According to an exemplary embodiment of the present invention, there is provided a pressure-sensitive adhesive label, including: a base; a pressure-sensitive adhesive layer provided on the base; a thermosensitive film provided on the pressure-sensitive adhesive layer; and a pressure-sensitive adhesive region including a plurality of openings through which the thermosensitive film is opened to expose the pressure-sensitive adhesive layer. The pressure-sensitive adhesive region includes an opening pattern in which the plurality of openings are arranged regularly.

Further, the pressure-sensitive adhesive region may include an opening pattern in which the plurality of openings are arranged regularly in vertical and horizontal directions.

Further, the pressure-sensitive adhesive region may include an opening pattern in which the plurality of openings are arranged regularly in a zigzag shape in vertical and horizontal directions.

Further, the pressure-sensitive adhesive region may include an opening pattern in which the plurality of openings are arranged regularly in a honeycomb shape.

Further, the pressure-sensitive adhesive region may include an opening pattern including a plurality of openings having different opening diameters.

Further, the thermosensitive film may have a thickness in a range of from 1 µm to 5 µm.

Further, the thermosensitive film may be made of an olefin-based resin.

Further, the thermosensitive film surrounding each of the plurality of openings may have a thickness substantially equal to a thickness of the thermosensitive film in a non-pressure-sensitive adhesive region not including the plurality of openings.

Further, the pressure-sensitive adhesive label may further include an indication layer on a side of the base opposite to the pressure-sensitive adhesive layer.

Further, the indication layer may include a thermosensitive color-developing layer.

According to an exemplary embodiment of the present invention, there is provided a label issuing device, including: a conveying part for conveying a pressure-sensitive adhesive label including a base, a pressure-sensitive adhesive layer provided on the base, and a thermosensitive film provided on the pressure-sensitive adhesive layer; a heating part for heating the thermosensitive film to form an opening to expose the pressure-sensitive adhesive layer; and a control part for controlling the conveying part and the heating part. The pressure-sensitive adhesive label includes a pressure-sensitive adhesive region including an opening pattern in which a plurality of the openings are arranged regularly.

Further, the pressure-sensitive adhesive label may further include an indication layer on a side of the base opposite to the pressure-sensitive adhesive layer, and the heating part heats the indication layer to perform recording on the indication layer.

Further, the control part may control the heating part and the conveying part to form an opening pattern in which a plurality of the openings are arranged regularly in vertical and horizontal directions in the thermosensitive film.

Further, the control part may control the heating part and the conveying part to form an opening pattern in which a plurality of the openings are arranged in a zigzag shape in the thermosensitive film.

Further, the control part may control the heating part and the conveying part to form an opening pattern in which a plurality of the openings are arranged in a honeycomb shape in the thermosensitive film.

Further, the control part may control the heating part and the conveying part to form an opening pattern including a plurality of openings having different opening diameters in the thermosensitive film.

The pressure-sensitive adhesive label of the exemplary embodiment of the present invention includes the base, the pressure-sensitive adhesive layer provided on the base, and the thermosensitive film provided on the pressure-sensitive adhesive layer. The thermosensitive film has an average thickness in a range of from 1 µm to 5 µm, and is opened by heating to expose the pressure-sensitive adhesive layer. Accordingly, it is possible to set the pressure-sensitive adhesive region and the non-pressure-sensitive adhesive region immediately before the use of the pressure-sensitive adhesive label in accordance with the purpose of use, and hence, the pressure-sensitive adhesive label with high convenience can be provided.

Embodiments of the present invention will now be described by way of further example only and with reference to the accompanying drawings, in which:
FIGS. 1A and 1B are schematic cross-sectional views of a pressure-sensitive adhesive label according to a first embodiment of the present invention;
FIGS. 2A to 2C are explanatory views illustrating a state in which the pressure-sensitive adhesive label according to the first embodiment of the present invention exhibits pressure-sensitive adhesiveness;
FIGS. 3A and 3B are views illustrating a pressure-sensitive adhesive label according to a second embodiment of the present invention;
FIGS. 4A to 4D are schematic plan views of a pressure-sensitive adhesive label according to a third embodiment of the present invention;
FIG. 5 is a schematic structural view of a label issuing device according to a fourth embodiment of the present invention;
FIG. 6 is a schematic structural view of a label issuing device according to a fifth embodiment of the present invention;
FIG. 7 is a cross-sectional view of a conventionally known label with a release sheet in which pressure-sensitive adhesive strength is partially sealed;
FIG. 8 is a schematic view of a production device, for illustrating a method of producing the conventionally known label with a release sheet in which pressure-sensitive adhesive strength is partially sealed;
FIGS. 9A and 9B are side views of a conventionally known thermosensitive pressure-sensitive adhesive member; and
FIG. 10 is a view illustrating a laminated structure of a conventionally known pressure-sensitive adhesive label.

FIGS. 1A and 1B are schematic cross-sectional views of a pressure-sensitive adhesive label 1 according to a first embodiment of the present invention. As illustrated in FIG. 1A, the pressure-sensitive adhesive label 1 includes a base 4, a pressure-sensitive adhesive layer 3 provided on the base 4, and a thermosensitive film 2 provided on the pressure-sensitive adhesive layer 3. The thermosensitive film 2 has an average thickness in a range of from 1 µm to 5 µm and is opened by heating to expose the pressure-sensitive adhesive layer 3. Further, as illustrated in FIG. 1B, an indication layer 5 can be provided on the side of the base 4 opposite to the pressure-sensitive adhesive layer 3. A character and graphic can be recorded on the indication layer 5 through use of an inkjet printer or the like. By forming the indication layer 5 as a thermosensitive color-developing layer, a character and graphic can be recorded by a heat-generating part of a thermal head.

FIGS. 2A to 2C are explanatory views illustrating a state in which the pressure-sensitive adhesive label 1 according to the first embodiment of the present invention exhibits pressure-sensitive adhesiveness. A thermal head 6 is used as heating means. As illustrated in FIG. 2A, a heat-generating part H of the thermal head 6 is brought into contact with the thermosensitive film 2 of the pressure-sensitive adhesive label 1. Then, as illustrated in FIG. 2B, the heated thermosensitive film 2 shrinks, and an opening 8 is formed in the thermosensitive film 2 to expose the pressure-sensitive adhesive layer 3. Next, as illustrated in FIG. 2C, when the pressure-sensitive adhesive label 1 is placed so that the opening 8 side is opposed to an adherend 9 and pressed from the base 4 side, a pressure-sensitive adhesive adheres under pressure to the adherend 9 through the opening 8, and the pressure-sensitive adhesive label 1 is adhered to the adherend 9.

Thus, by setting the size, position, number, and the like of the opening 8 to be formed in the thermosensitive film 2 of the pressure-sensitive adhesive label 1, a pressure-sensitive adhesive region and a non-pressure-sensitive adhesive region, and pressure-sensitive adhesive strength of the pressure-sensitive adhesive region can be set immediately before the use of the pressure-sensitive adhesive label 1 in accordance with the purpose of use. For example, assuming that the pressure-sensitive adhesive strength in the case where an aperture ratio of the pressure-sensitive adhesive region per unit area is 100% is "high", in the case where the aperture ratio is 50%, the pressure-sensitive adhesive strength is "medium", and in the case where the aperture ratio is 0%, there is "no pressure-sensitive adhesive strength". By controlling the aperture ratio, the pressure-sensitive adhesive strength of the pressure-sensitive adhesive label 1 can be controlled. In this case, when the thickness of the thermosensitive film 2 becomes smaller than 1 µm, coverage of the pressure-sensitive adhesive layer 3 is degraded. When the thickness of the thermosensitive film 2 becomes larger than 5 µm, heat conductivity is degraded, and an opening diameter of the opening becomes small. Thus, it is preferred that the thickness of the thermosensitive film 2 be 1 µm to 5 µm.

The pressure-sensitive adhesive label 1 of the present invention does not use a release sheet. Thus, there is no release sheet to be discarded at a time of use, and hence, an environmental burden can be alleviated. Further, the thickness of the pressure-sensitive adhesive label 1 becomes small due to the absence of a release sheet, and hence, the number of pressure-sensitive adhesive labels per roll can be increased.

As the thermosensitive film 2, an olefin-based resin or an engineering plastic can be used. The olefin-based resin is used for many purposes as a general-purpose resin, and hence, can form the thermosensitive film 2 at low cost. As the olefin-based resin, any one or more of polyethylene (PE), polyvinyl chloride (PVC), polypropylene (PP), a multi-layer polyolefin-based resin in which PE and PP are stacked, polystyrene (PS), and polyethylene terephthalate (PET) can be used. As the olefin-based resin, a homopolymer, a copolymer, or a multistage polymer can be used. Polyolefin selected from the group consisting of the homopolymer, the copolymer, and the multistage polymer can also be used alone or in combination. Typical examples of the above-mentioned polymers include low-density polyethylene, linear low-density polyethylene, medium-density polyethylene, high-density polyethylene, ultrahigh molecular weight polyethylene, isotactic polypropylene, atactic polypropylene, polybutene, and ethylene propylene rubber.

Further, as the thermosensitive film 2, any one or more of a hybrid that is a stack type of PS and PET, an ethylene/vinyl acetate copolymer (EVA) based resin, a polyvinyl alcohol (PVA) based resin, a polylactic acid (PLA) based resin that is a plant-based material, and the like can be used. Further, a cellulose-based material that can be expected to lower the cost can be used. It is preferred to select a material whose contact angle with the pressure-sensitive adhesive layer 3 to be adjacent to the thermosensitive film 2 increases during heating. Further, a uniaxially stretched or biaxially stretched material which uses a stretching process can be used for forming the thermosensitive film 2. In the case of using a stretched film, there can be used a material which is stabilized chemically and mechanically by manipulating a glass transition point by copolymerizing a single monomer with another monomer or blending different kinds of components such as rubber.

The viscosity average molecular weight of the olefin-based resin is preferably 50,000 to 12,000,000, more preferably 50,000 to less than 2,000,000, most preferably 100,000 to less than 1,000,000. If the viscosity average molecular weight is 50,000 or more, the melt-tension at a time of melt molding becomes large to enhance moldability, which provides sufficient entanglement and tends to give high strength. If the viscosity average molecular weight is 12,000,000 or less, particularly, thickness stability is excellent.

It is preferred that the thermosensitive film 2 have a small heat capacity. More specifically, in the case where the heat capacity of the thermosensitive film 2 is smaller than that of the pressure-sensitive adhesive layer 3, when the thermosensitive film 2 is heated, the rise in temperature and melting of the thermosensitive film 2 are facilitated, and the pressure-sensitive adhesive layer 3 can be prevented from being deformed or denatured due to heat.

Here, as the pressure-sensitive adhesive layer 3, a pressure-sensitive adhesive can be used. The pressure-sensitive adhesive can adhere to an adherend merely by applying a small pressure at room temperature without using water, a solvent, or heat. Further, the pressure-sensitive adhesive adheres to an adherend strongly due to its cohesion force and elasticity, and can also be peeled off from a hard smooth surface. Specifically, a silicone-based pressure-sensitive adhesive, a rubber-based pressure-sensitive adhesive, or an acrylic pressure-sensitive adhesive can be used depending upon its intended use. The silicone-based pressure-sensitive adhesive includes silicone having a high cohesion force and silicone having a high pressure-sensitive adhesive strength. The rubber-based pressure-sensitive adhesive may include any one or more, or all, of natural rubber, styrene-butadiene rubber (SBR), polyisobutylene, and a rubber-based material. The acrylic pressure-sensitive adhesive includes a cross-linking material using a monomer with a low glass transition point and a cross-linking agent, and a non-cross-linking material obtained by copolymerizing a monomer with a low glass transition point and a monomer with a high glass transition point.

As the base 4, paper or a plastic material can be used. The base 4 can be made of any material as long as the material can support the indication layer 5, if it is to be formed on a lower surface thereof, and the pressure-sensitive adhesive layer 3 to be formed on an upper surface thereof. Examples of the material for the base 4 include polypropylene, polyethylene, polystyrene, an acrylic resin, and paper.

FIGS. 3A and 3B are views illustrating a pressure-sensitive adhesive label 1 according to a second embodiment of the present invention, which are photographs of openings formed in a thermosensitive film 2. FIG. 3A illustrates a state in which pressure-sensitive adhesion characteristics are not controlled, and FIG. 3B illustrates a state in which pressure-sensitive adhesion characteristics are controlled.

The pressure-sensitive adhesive label 1 includes a base 4, a pressure-sensitive adhesive layer 3 provided on the base 4, and the thermosensitive film 2 provided on the pressure-sensitive adhesive layer 3. The pressure-sensitive adhesive label 1 in FIG. 3B includes a pressure-sensitive adhesive region D including a plurality of openings 8 through which the thermosensitive film 2 is opened to expose the pressure-sensitive adhesive layer 3. In this case, the pressure-sensitive adhesive region D refers to a region in which pressure-sensitive adhesiveness can be controlled.

In the example illustrated in FIG. 3A, pressure-sensitive adhesiveness has not been controlled, and hence, this example does not correspond to the pressure-sensitive adhesive region D of the present invention. In FIG. 3A, a black region B indicates a region in which the thermosensitive film 2 remains, and a white region W indicates a region in which the thermosensitive film 2 is opened to expose the pressure-sensitive adhesive layer 3. A region X in which the black region B and the white region W are randomly mixed indicates a region in which pressure-sensitive adhesive strength is not sufficient or there is no pressure-sensitive adhesive strength. A plurality of white regions W (openings 8) do not have a predetermined shape. Therefore, in the opened state illustrated in FIG. 3A, the pressure-sensitive adhesive region D in which predetermined pressure-sensitive adhesive strength is exhibited cannot be formed, and hence, the opened state illustrated in FIG. 3A does not correspond to the pressure-sensitive adhesive region D of the present invention.

On the other hand, in the example illustrated in FIG. 3B, pressure-sensitive adhesiveness has been controlled, and hence, this example corresponds to the pressure-sensitive adhesive region D of the present invention. That is, in order to constitute the pressure-sensitive adhesive region D of the present invention, the following conditions needs to be satisfied: (1) the white region W (opening 8) through which the pressure-sensitive adhesive layer 3 is exposed is surrounded by the black region B (thermosensitive film 2); (2) a plurality of openings 8 (white regions W) having a substantially equal opening shape or opening area are formed; and (3) the region X in which the black region B (thermosensitive film 2) and the white region W (opening 8) are randomly mixed to generate inconstant pressure-sensitive adhesive strength is not formed. In addition, the conditions include that (4) the openings 8 (white regions W) are arranged regularly. In FIG. 3B, the thickness of the thermosensitive film 2 in the black region B is substantially equal to that of the thermosensitive film 2 in the non-pressure-sensitive adhesive region in which the openings 8 are not formed.

The thermosensitive film 2, the pressure-sensitive adhesive layer 3, and the base 4 can be made of materials similar to those respectively described in the first embodiment. Further, the thickness of the thermosensitive film 2 can be set in a range of 1 µm to 5 µm. When the thermosensitive film 2 is heated to be opened, the thermosensitive film 2 aggregates around the opening 8, and a bank surrounding the opening 8 may be formed. In this case, it is desired that the opening 8 be formed so that the height of the bank does not exceed five times the thickness of the thermosensitive film 2 in the non-pressure-sensitive adhesive region. This is because, as the height of the bank increases, the pressure-sensitive adhesive is less easily exposed through the opening 8 surrounded by the bank, and consequently, a contact area between the pressure-sensitive adhesive layer 3 and an adherend 9 decreases to reduce pressure-sensitive adhesive strength. The shape of the opening 8 may be a circle, an oval, a heart-like shape, or the like. The opening 8 may be a rectangle or other polygons. What is required is that the opening 8 constituting the pressure-sensitive adhesive region D satisfies the above-mentioned conditions (1) to (3), and more preferably, satisfies the above-mentioned condition (4).

As described above, in the pressure-sensitive adhesive label 1 according to the present invention, the pressure-sensitive adhesive region D and the non-pressure-sensitive adhesive region can be set immediately before the pressure-sensitive adhesive label 1 is adhered to the adherend 9 without using a large-scale production device, and the opening 8 can be formed in accordance with the pressure-sensitive adhesiveness required by the pressure-sensitive adhesive region D. Further, a release sheet is not required to be used, and the thickness of the pressure-sensitive adhesive label 1 becomes smaller due to the absence of the release sheet, and hence, the number of issuance of effective pressure-sensitive adhesive labels per roll can be increased. The thermosensitive film 2 can be opened with low power consumption, and an environmental burden can be reduced due to the absence of a release sheet to be discarded at a time of use. Further, the opening 8 can be formed with good controllability, and hence, the pressure-sensitive adhesive does not adhere to a label issuing device or the pressure-sensitive adhesive label 1 to hamper control.

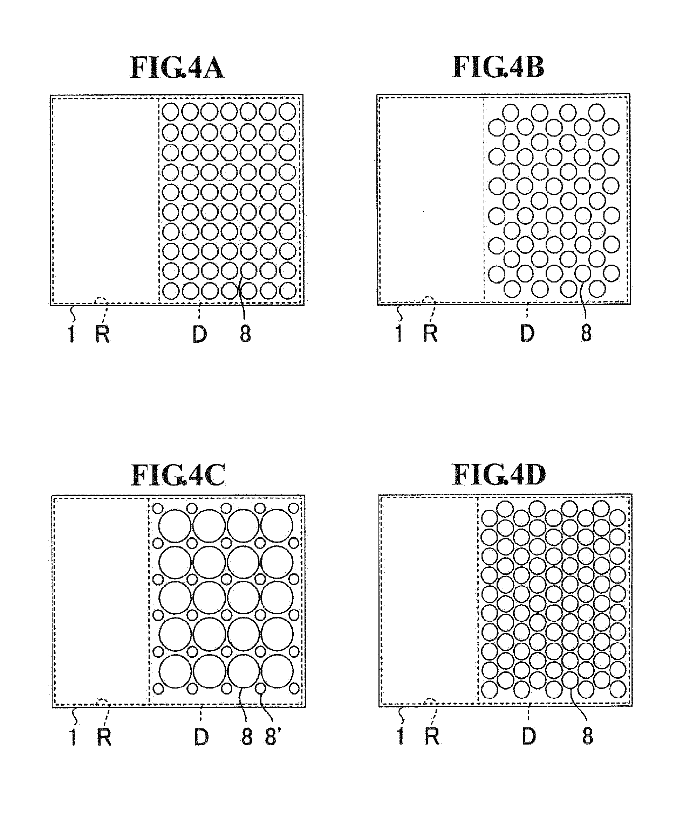

FIGS. 4A to 4D are schematic plan views of a pressure-sensitive adhesive label 1 according to a third embodiment of the present invention. FIGS. 4A to 4D illustrate arrangement examples of openings 8 to be formed in a pressure-sensitive adhesive region D. In FIG. 4A, the pressure-sensitive adhesive label 1 includes a non-pressure-sensitive adhesive region R and a pressure-sensitive adhesive region D, and the pressure-sensitive adhesive region D has an opening pattern in which a plurality of openings 8 are arranged regularly in vertical and horizontal directions. In this case, a maximum aperture ratio of the pressure-sensitive adhesive label 1 per unit area can be set to about 78%. In FIG. 4B, the pressure-sensitive adhesive label 1 includes a non-pressure-sensitive adhesive region R and a pressure-sensitive adhesive region D, and the pressure-sensitive adhesive region D has an opening pattern in which a plurality of openings 8 are arranged regularly in a zigzag shape in vertical and horizontal directions. In FIG. 4C, the pressure-sensitive adhesive label 1 includes a non-pressure-sensitive adhesive region R and a pressure-sensitive adhesive region D, and the pressure-sensitive adhesive region D has an opening pattern in which a plurality of openings 8, 8' having different opening diameters are arranged regularly in vertical and horizontal directions. In this case, an opening 8' having a smaller opening diameter is inserted between the openings 8 each having a larger opening diameter. A maximum aperture ratio of the pressure-sensitive adhesive label 1 per unit area can be set to about 92%. In FIG. 4D, the pressure-sensitive adhesive label 1 includes a non-pressure-sensitive adhesive region R and a pressure-sensitive adhesive region D, and the pressure-sensitive adhesive region D has an opening pattern in which a plurality of openings 8 are arranged regularly in a honeycomb shape. A maximum aperture ratio of the pressure-sensitive adhesive label 1 per unit area can be set to about 91 %.

Note that, the respective shapes of the non-pressure-sensitive adhesive region R and the pressure-sensitive adhesive region D can be set arbitrarily in accordance with the material, application, use environment, and the like of an adherend. Further, the area and shape of the opening 8 can be changed by controlling the shape of the heat-generating part H and the amount of energy to be imparted to the heat-generating part H. For example, the opening 8 can have a shape such as an oval, a heart-like shape, a polygon, and other shapes. Further, the dot pitch of the openings 8 can be set to 100 dpi to 600 dpi. The respective materials for the base 4, the pressure-sensitive adhesive layer 3, and the thermosensitive film 2, and the thickness of the thermosensitive film 2 are similar to those of the first and second embodiment, and hence, the descriptions thereof are omitted.

A label issuing device of the present invention includes a conveying part for conveying a pressure-sensitive adhesive label including a base, a pressure-sensitive adhesive layer provided on the base, and a thermosensitive film provided on the pressure-sensitive adhesive layer, a heating part for heating the thermosensitive film to form an opening to expose the pressure-sensitive adhesive layer, and a control part for controlling the conveying part and the heating part.

The label issuing device of the present invention can set a pressure-sensitive adhesive region and a non-pressure-sensitive adhesive region immediately before the use of the pressure-sensitive adhesive label 1 in accordance with the purpose of use without using a large-scale production device. Further, the number, positions, and aperture ratio of openings to be formed in the pressure-sensitive adhesive region can be changed in accordance with the properties of an adherend and the use environment of the pressure-sensitive adhesive label. In addition, a release sheet is not required to be used, and the pressure-sensitive adhesive label 1 can be reduced in thickness due to the absence of a release sheet, and hence, the number of issuance of effective pressure-sensitive adhesive labels per roll can be increased. Further, an environmental burden can be reduced due to the absence of a release sheet.

Specific description is made. As the heating part, a thermal head or laser light can be used. When the thermal head is used, a large number of heat-generating parts can be arranged in a row, and hence, a large number of openings can be formed in the thermosensitive film 2 simultaneously in a row. The control part selects opening pattern information stored in advance and causes the heating part to generate heat to form a pressure-sensitive adhesive region including a plurality of openings in the thermosensitive film. The control part controls the conveying part to convey the pressure-sensitive adhesive label in a predetermined amount and causes the heat-generating part to generate heat. By repeating this process, a predetermined opening pattern is formed in the pressure-sensitive adhesive label.

An opening diameter of the opening can be controlled in accordance with the heat quantity applied by the heat-generating part. That is, in order to decrease an opening diameter, the heat quantity applied from the heat-generating part to the thermosensitive film is suppressed, and in order to increase an opening diameter, the heat quantity is increased. That is, the control part can control an opening diameter of the opening by controlling power supplied to the heat-generating part and heating time for heating the thermosensitive film. The pattern information of the opening is stored in advance, and the control part controls the heating part and the conveying part based on the pattern information of a selected opening pattern to form a pressure-sensitive adhesive region formed of the pattern of the opening in the pressure-sensitive adhesive label. For example, an opening pattern in which a plurality of openings are arranged in vertical and horizontal directions, an opening pattern in which openings are arranged in a zigzag shape, an opening pattern in which openings are arranged in a honeycomb shape, or an opening pattern including a plurality of different sized or shaped openings can be selected to be formed.

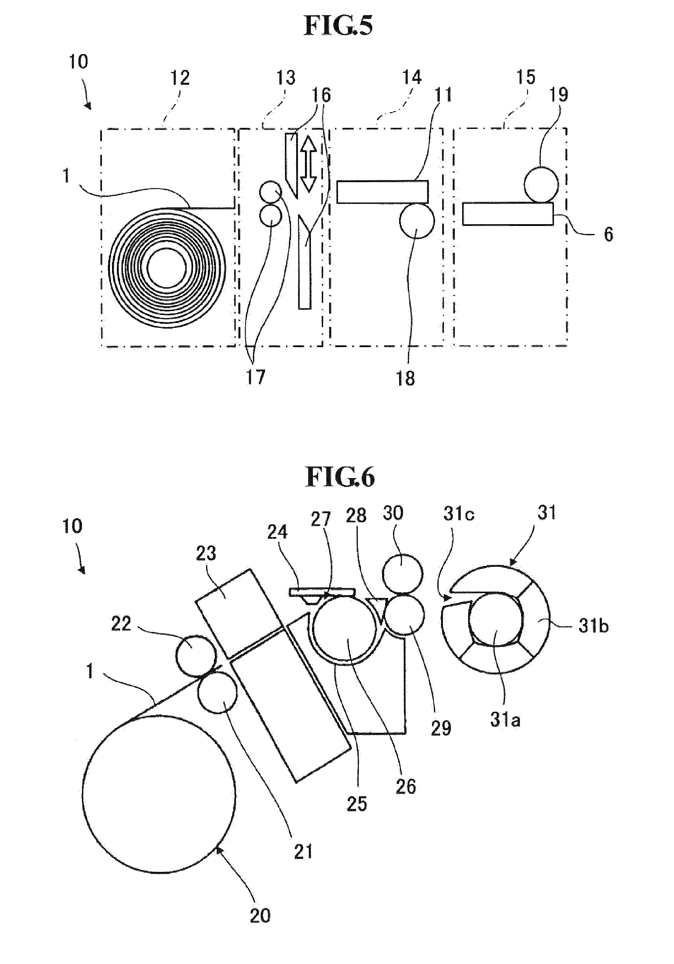

FIG. 5 is a schematic structural view of a label issuing device 10 according to a fourth embodiment of the present invention. The label issuing device 10 includes a roll sheet accommodating part 12 for accommodating the pressure-sensitive adhesive label 1, a roll sheet cutting part 13 for cutting the pressure-sensitive adhesive label 1, a label recording part 14 as a recording part for performing recording on the pressure-sensitive adhesive label 1, and a pressure-sensitive adhesiveness exhibiting part 15 for allowing the pressure-sensitive adhesive label 1 to exhibit pressure-sensitive adhesiveness. The roll sheet accommodating part 12 accommodates the pressure-sensitive adhesive label 1 rolled into a roll shape. The pressure-sensitive adhesive label 1 has a laminated structure including the base 4, the indication layer 5 provided on the lower surface of the base 4, the pressure-sensitive adhesive layer 3 provided on the upper surface of the base 4, and the thermosensitive film 2 provided on a surface of the pressure-sensitive adhesive layer 3. The roll sheet cutting part 13 cuts the pressure-sensitive adhesive label 1 sent from conveying rollers 17 as the conveying part to a predetermined length by a cutter member 16. The label recording part 14 performs recording by a recording thermal head 11 on the indication layer 5 of the pressure-sensitive adhesive label 1 placed on a conveying roller 18. As already described in the first to third embodiments, the pressure-sensitive adhesiveness exhibiting part 15 heats and opens the thermosensitive film 2 of the pressure-sensitive adhesive label 1, which is sandwiched between a conveying roller 19 as the conveying part and the thermal head 6, by the thermal head 6 as the heating part to expose the pressure-sensitive adhesive layer 3 through the opening 8.

Here, the thermal head 6 is provided with the heat-generating part H in which a plurality of heat-generating bodies are arranged in parallel, and thus, can form the pressure-sensitive adhesive region D in which a plurality of openings 8 are opened in parallel simultaneously. It is preferred that a heat-concentration type head be used as the heat-generating part H. The heat-generating surface of the heat-generating part H may have any shape such as a rectangle, a circle, an oval, a heart-like shape, or other shapes. A plurality of heat generating bodies can be formed at an arrangement density of 100 dpi to 600 dpi.

The label issuing device 10 can form the pressure-sensitive adhesive region D including a plurality of openings 8 in a conveying direction of the pressure-sensitive adhesive label 1 by using the control part (not shown) to control the heating part and the conveying part. That is, the label issuing device 10 can form a required number of openings 8 at positions required in the pressure-sensitive adhesive label 1. In this manner, it is possible to control the position and size of the pressure-sensitive adhesive region D in which pressure-sensitive adhesiveness of the pressure-sensitive adhesive label 1 is to be exhibited.

FIG. 6 is a schematic structural view of a label issuing device 10 according to a fifth embodiment of the present invention. The fifth embodiment is different from the fourth embodiment in that one thermal head 24 forms the openings 8 in the thermosensitive film 2, and a character and the like recorded on the indication layer 5. The identical parts or parts having the identical functions to those of the fourth embodiment are denoted by the identical reference symbols.

The label issuing device 10 includes a roll accommodating unit 20 for rolling up the pressure-sensitive adhesive label 1 into a roll shape, a cutter unit 23 for cutting the pressure-sensitive adhesive label 1, the thermal head 24 as the heating part for performing recording on the indication layer 5 of the pressure-sensitive adhesive label 1 and forming the openings 8 in the thermosensitive film 2, a platen roller 26 for holding the pressure-sensitive adhesive label 1 at a time of recording by the thermal head 24 or forming of the openings 8, a roll-up device 31 for rolling up the pressure-sensitive adhesive label 1 onto a roll-up roller 31a and retaining the pressure-sensitive adhesive label 1 temporarily, conveying rollers 21, 29 and driven rollers 22, 30 as the conveying part for conveying the pressure-sensitive adhesive label 1, a conveying direction regulating unit 28 for regulating a conveying direction of the pressure-sensitive adhesive label 1, and a control part (not shown) for controlling energy imparted to the thermal head 24 and controlling the rotation of the conveying rollers 21, 29 and the platen roller 26.

The label issuing device 10 is operated as follows. The control part drives the conveying roller 21 and the driven roller 22 to pull out the pressure-sensitive adhesive label 1 rolled up onto the roll accommodating unit 20. The control part further delivers the pressure-sensitive adhesive label 1 having passed through the cutter unit 23 from a delivery path 27 and rotates the platen roller 26 in a clockwise direction so that the pressure-sensitive adhesive label 1 is sandwiched between the platen roller 26 and the thermal head 24. The control part further causes the heat-generating part H of the thermal head 24 to generate heat and perform recording on the indication layer 5 of the pressure-sensitive adhesive label 1. The control part rotates the conveying roller 29 and the roll-up roller 31a to guide the pressure-sensitive adhesive label 1 with the indication layer 5 recorded from an insertion port 31c into the roll-up device 31, and rolls up the pressure-sensitive adhesive label 1 while pressing the pressure-sensitive adhesive label 1 onto the roll-up roller 31a with a guide 31b. The control part operates the cutter unit 23 to cut the pressure-sensitive adhesive label 1, to thus complete a recording operation.

Next, the control part rotates the conveying roller 29 to convey the cut portion of the pressure-sensitive adhesive label 1 to the position of the conveying roller 29 and the driven roller 30. Next, the control part drives the conveying direction regulating unit 28 to rotate the conveying roller 29 in a reverse direction and rotate the platen roller 26 in a clockwise direction, and inverts the pressure-sensitive adhesive label 1 through a conveying path 25 to sandwich the pressure-sensitive adhesive label 1 between the thermal head 24 and the platen roller 26. The control part causes the heat-generating part H of the thermal head 24 to generate heat based on the selected pattern information and forms a predetermined pressure-sensitive adhesive region D including a plurality of openings 8 in the thermosensitive film 2 of the pressure-sensitive adhesive label 1. The pressure-sensitive adhesive label 1 in which the pressure-sensitive adhesive region D is formed is pulled out from the position of the conveying direction regulating unit 28 to the outside.

The shape and the like of the pressure-sensitive adhesive region D are the same as those of the second or third embodiment, and hence, the descriptions thereof are omitted. Thus, the pressure-sensitive adhesive region D and the non-pressure-sensitive adhesive region R can be set immediately before the use of the pressure-sensitive adhesive label 1 in accordance with the purpose of use, and further, the number, positions, and aperture ratio of the openings 8 to be formed in the pressure-sensitive adhesive region D can be changed in accordance with the properties of the adherend 9 and the use environment of the pressure-sensitive adhesive label 1.

The foregoing description has been given by way of example only and it will be appreciated by a person skilled in the art that modifications can be made without departing from the scope of the present invention.

## Claims

1. A pressure-sensitive adhesive label (1), comprising:
a base (4);
a pressure-sensitive adhesive layer (3) provided on the base;
a thermosensitive film (2) provided on the pressure-sensitive adhesive layer; and
a pressure-sensitive adhesive region (D) comprising a plurality of openings (8) through which the thermosensitive film is opened to expose the pressure-sensitive adhesive layer,
wherein the pressure-sensitive adhesive region comprises an opening pattern in which the plurality of openings are arranged regularly.

2. A pressure-sensitive adhesive label according to claim 1, wherein the pressure-sensitive adhesive region (D) comprises an opening pattern in which the plurality of openings (8) are arranged regularly in vertical and horizontal directions.

3. A pressure-sensitive adhesive label according to claim 1, wherein the pressure-sensitive adhesive region (D) comprises an opening pattern in which the plurality of openings (8) are arranged regularly in a zigzag shape in vertical and horizontal directions.

4. A pressure-sensitive adhesive label according to claim 1, wherein the pressure-sensitive adhesive region (D) comprises an opening pattern in which the plurality of openings (8) are arranged regularly in a honeycomb shape.

5. A pressure-sensitive adhesive label according to any one of the preceding claims, wherein the pressure-sensitive adhesive region (D) comprises an opening pattern comprising a plurality of openings (8, 8') having different opening diameters.

6. A pressure-sensitive adhesive label according to any one of the preceding claims, wherein the thermosensitive film surrounding each of the plurality of openings has a thickness substantially equal to a thickness of the thermosensitive film in a non-pressure-sensitive adhesive region not including the plurality of openings.

7. A pressure-sensitive adhesive label according to any one of the preceding claims, wherein the thermosensitive film has a thickness in a range of from 1 µm to 5 µm.

8. A pressure-sensitive adhesive label according to any one of the preceding claims, wherein the thermosensitive film is made of an olefin-based resin.

9. A pressure-sensitive adhesive label according to any one of the preceding claims, further comprising an indication layer (5) on a side of the base (4) opposite to the pressure-sensitive adhesive layer (3).

10. A pressure-sensitive adhesive label according to claim 9, wherein the indication layer (5) comprises a thermosensitive color-developing layer.

11. A label issuing device (10), comprising:
a conveying part (17) for conveying a pressure-sensitive adhesive label (1) comprising a base (4), a pressure-sensitive adhesive layer (3) provided on the base, and a thermosensitive film (2) provided on the pressure-sensitive adhesive layer;
a heating part (6) for heating the thermosensitive film to form openings (8) to expose the pressure-sensitive adhesive layer; and
a control part configured to control the conveying part and the heating part to cause the pressure-sensitive adhesive label (1) to comprise a pressure-sensitive adhesive region (1) comprising an opening pattern in which a plurality of the openings (8) are arranged regularly.

12. A label issuing device according to claim 11,
wherein the pressure-sensitive adhesive label (1) further comprises an indication layer (5) on a side of the base (4) opposite to the pressure-sensitive adhesive layer (3), and
wherein the heating part is adapted to heat the indication layer to perform recording on the indication layer.

13. A label issuing device according to claim 11 to claim 12, wherein the control part is configured to control the heating part (6) and the conveying part (17) to form an opening pattern in which a plurality of the openings are arranged regularly in vertical and horizontal directions in the thermosensitive film.

14. A label issuing device according to claim 11 or claim 12, wherein the control part is configured to control the heating part (6) and the conveying part (17) to form an opening pattern in which a plurality of the openings (8) are arranged in a zigzag shape in the thermosensitive film.

15. A label issuing device according to claim 11 or claim 12, wherein the control part is configured to control the heating part (6) and the conveying part (17) to form an opening pattern in which a plurality of the openings (8) are arranged in a honeycomb shape in the thermosensitive film.

16. A label issuing device according to any one of claims 11 to 15, wherein the control part is configured to control the heating part (6) and the conveying part (17) to form an opening pattern comprising a plurality of openings (8, 8') having different opening diameters in the thermosensitive film.
